# EUROPÄISCHE PATENTANMELDUNG

(11) **EP 2 116 887 A1**
(43) Veröffentlichungstag der Anmeldung: **11.11.2009**
(21) Anmeldenummer: 09159794.8
(22) Anmeldetag: 08.05.2009
(51) Int. Cl.: G02C 5/14, G02C 5/00

(54) **Brillenbügel**

(30) Priorität: 08.05.2008 DE 102008023295
(71) Anmelder: Mykita Studio GmbH, 10115 Berlin (DE)
(72) Erfinder: Haffmans, Phillipp, 10437 Berlin (DE); Haffmans, Daniel, 10245 Berlin (DE); Gottschling, Harald, 10435 Berlin (DE); Krüger, Moritz, 10115 Berlin (DE)
(74) Vertreter: Schubert, Klemens

(57) **Zusammenfassung**

Brillenbügel bestehend aus einem Verbindungsstück und einem Bügel, wobei das eine Ende des Verbindungsstücks mit der frontalen Brillenfassung oder einem Brillengelenk verbunden ist oder selbst Teil eines Brillengelenks ist und das andere Ende des Verbindungsstücks in eine Öffnung im Bügel greift und das vordere Ende des Bügels umfasst.

Des Weiteren wird ein Verfahren zur Herstellung eines Brillenbügels beschrieben, wobei man das Verbindungsstück in die Öffnung des Bügels einhakt und anschließend um das vordere Ende des Bügels klammert.

Weiterhin wird Verwendung eines Brillenbügels zur Herstellung eines Brillengestells beschrieben.

## Beschreibung

Die vorliegende Erfindung betrifft einen Brillenbügel bestehend aus einem Verbindungsstück und einem Bügel. Weiterhin betrifft die vorliegende Erfindung ein Verfahren zur Herstellung des Brillenbügels sowie die Verwendung des Brillenbügels.

Im Allgemeinen bestehen Brillen aus einer frontalen Brillenfassung, die geeignet ist Brillengläser aufzunehmen und zwei Brillenbügeln, die mit der Brillenfassung verbunden sind. Der vordere Teil des Brillenbügels ist hierbei zumeist durch ein Brillengelenk mit der Brillenfassung verbunden, während der hintere Teil des Brillenbügels einen Ohrbügel bildet, der um ein Ohr des Trägers greift, und somit den festen Sitz der Brille gewährleistet.

Aufgabe der vorliegenden Erfindung ist es einen Brillenbügel zu schaffen, der eine Kombination von Brillenteilen aus unterschiedlichen Materialien ohne Kleben, Löten oder Schrauben ermöglicht und zudem leicht mit einem Brillengelenk oder der frontalen Brillenfassung einer Brille verbindbar ist.

Die Aufgabe der vorliegenden Erfindung wird durch einen Brillenbügel, bestehend aus einem Verbindungsstück und einem Bügel gelöst, wobei das eine Ende des Verbindungsstücks mit der frontalen Brillenfassung oder einem Brillengelenk verbunden ist oder selbst Teil eines Brillengelenks ist und das andere Ende des Verbindungsstücks in eine Öffnung im Bügel greift und das vordere Ende des Bügels umfasst. Durch eine solche Ausführungsform wird die Kombination einer Brillenfassung mit Brillenbügeln aus unterschiedlichen Materialien ermöglicht.

Das Verbindungsstück ist vorzugsweise reversibel mit dem Bügel verbunden. Die Verbindung zwischen dem Verbindungsstück und dem Bügel hält allein durch die Verklammerung der beiden Teile. Diese Verklammerung lässt sich jederzeit lösen und wieder verbinden. Auf diese Weise lassen sich an einer Brillenfassung verschiedene Brillenbügel befestigen. Dies hat den Vorteil, dass nicht nur verschiedene Brillenbügel unter ästhetischen Gesichtspunkten (Form, Farbe, Material) zu einer Brillenfassung ausgewählt werden können, sondern, dass auch Brillenbügel in verschiedenen Längen und Formen ausgewählt werden können, die individuell an ihren Träger angepasst sind.

Da die Grundkonfiguration eines Brillengestells normalerweise durch den Hersteller fertig montiert wird, ist es denkbar, das Verbindungsstück dauerhaft mit dem Bügel zu fixieren. Hierzu kann das Verbindungsstück beispielsweise mit dem Bügel verklebt werden.

Damit sich das Verbindungsstück um das vordere Ende des Bügels klammern lässt, weist das Verbindungsstück vorzugsweise einen Haken auf, der in eine Öffnung des Bügels greift und einen Knick, der um das Ende des Bügels greift.

In einer bevorzugten Ausführungsform der Erfindung weist der Bügel einen Kanal von der Öffnung bis zum vorderen Ende des Bügels auf, wobei der Kanal zur Aufnahme des bügelseitigen Teils des Verbindungsstücks geeignet ist. Ein solcher Kanal hat den Vorteil, dass die Verbindungsklammer am Verrutschen gehindert wird und somit eine festere Verbindung von Verbindungsstück und Bügel erzielt wird. Der Kanal sollte dabei derart dimensioniert sein, dass er das bügelseitige Ende des Verbindungsstücks formschlüssig aufnimmt.

Das vordere Ende des Bügels weist vorzugsweise eine Kante auf. Weiter bevorzugt greift das Verbindungsstück um die Kante des Bügels, wodurch ein Lösen der Verklammerung von Verbindungsstück und Bügel verhindert wird.

Das Verbindungsstück besteht bevorzugt aus einem flexiblen Material. Weiter bevorzugt besteht das Verbindungsstück aus Metall oder Kunststoff. Als Metalle können Metalle oder Metalllegierungen, wie beispielsweise Titan, Aluminium, Messing, Kupfer oder Eisen, insbesondere Edelstahl verwendet werden. Als Kunststoffe können Kunststoffe, wie beispielsweise Polyethylen, Polypropylen, Polyethylenterephthalat (PET), Polyamid, Polystyrol oder Polyurethan verwendet werden.

Auch der Bügel kann aus allen geeigneten Materialien hergestellt werden. Die Auswahl unterliegt dabei teilweise auch ästhetischen beziehungsweise modischen Gesichtspunkten. Bevorzugt besteht der Bügel aus Metall, Kunststoff, Faserverbundstoffen (beispielsweise auf Basis von Kohlefasen), gewebeverstärkten Kunststoffen, Horn, Holz oder einer Kombination dieser Stoffe. Als Kunststoff kann zum Beispiel Celluloseacetat oder Polyamid verwendet werden.

Die Form des Bügels wird im Wesentlichen durch den Tragekomfort sowie ästhetische Gesichtspunkte bestimmt. Der Bügel ist im Bereich der vorderen zwei Drittel gerade und im hinteren Drittel leicht bis stark gebogen. Dieser hintere Bereich bildet den Ohrbügel und dient zur Auflage des Brillenbügels auf dem Ohr des Trägers.

Des Weiteren wird die Aufgabe der vorliegenden Erfindung durch ein Verfahren zur Herstellung eines Brillenbügels gelöst, bei dem man den Haken des Verbindungsstücks in die Öffnung des Bügels einhakt und anschließend den Knick des Verbindungsstücks um das vordere Ende des Bügels klammert. Ein solcher Brillenbügel lässt sich mit einer Brillenfassung verbinden. Dabei kann der Brillenbügel entweder direkt oder über ein Brillengelenk mit der Brillenfassung verbunden sein.

In einem weiteren Schritt kann der Bügel dauerhaft mit dem Verbindungsstück verbunden werden. Hierzu kann das Verbindungsstück mit dem Bügel zusammengeklebt werden.

Damit das Verbindungsstück mit dem Bügel eine feste Verbindung eingeht, kann in einem weiteren Schritt der Haken, zum Beispiel mit einem dafür geeigneten Stempel, zusammengedrückt werden.

Weiterhin wird die Aufgabe der vorliegenden Erfindung durch die Verwendung eines Brillenbügels zur Herstellung eines Brillengestells gelöst. Die erfindungsgemäßen Brillenbügel lassen sich direkt oder über ein Brillengelenk mit einer Brillenfassung verbinden. Dabei wird das Verbindungsstück sowohl mit dem Bügel als auch mit der Brillenfassung oder einem Brillengelenk verbunden. Das Verbindungsteil kann auch selbst Teil eines Brillengelenks sein.

Im Folgenden wir die vorliegende Erfindung anhand von Figuren näher beschrieben. Im Einzelnen zeigt
- Figur 1: eine dreidimensionale Darstellung des erfindungsgemäßen Brillenbügels im zusammengebauten und im zerlegten Zustand,
- Figur 2: eine weitere dreidimensionale Darstellung des erfindungsgemäßen Brillenbügels im zusammengebauten und im zerlegten Zustand,
- Figur 3: eine dreidimensionale Darstellung des erfindungsgemäßen Brillenbügels im zusammengebauten und im zerlegten Zustand, verbunden mit einer Brillenfassung,
- Figur 4a: eine dreidimensionale Darstellung des erfindungsgemäßen Brillenbügels im zerlegten Zustand,
- Figur 4b: eine dreidimensionale Darstellung des erfindungsgemäßen Brillenbügels im zusammengebauten Zustand,
- Figur 5: eine dreidimensionale Darstellung des Verbindungsstücks und
- Figur 6: eine dreidimensionale Darstellung des Brillengestells.

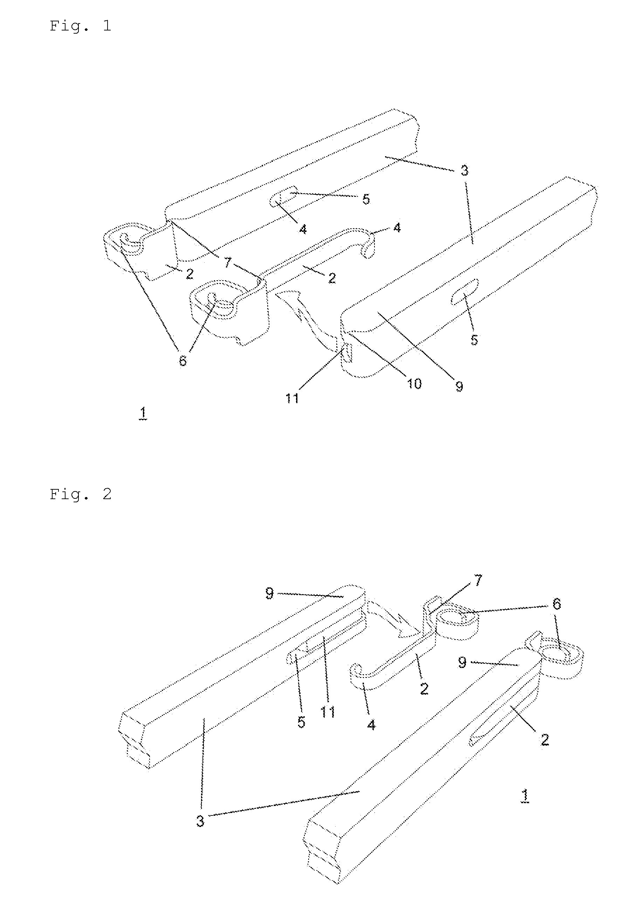

Die Figur 1 zeigt eine dreidimensionale Darstellung eines Ausschnitts des erfindungsgemäßen Brillenbügels 1, der aus einem Verbindungsteil 2 und einem Bügel 3 besteht.

Das Verbindungsteil 2 weist einen Haken 4 auf, der geeignet ist in eine Öffnung 5 im Bügel 3 zu greifen. An dem Ende des Verbindungsstücks 2, das dem Haken 4 gegenüberliegt ist das Verbindungsstück 2 in Form eines Teils eines Brillengelenkes 6 geformt. Des Weiteren weist das Verbindungsstück 2 einen Knick 7 auf.

Der Bügel 3 weist, an dem der frontalen Brillenfassung 8 zugewandtem vorderen Ende 9, eine Kante 10 auf. Ist das Verbindungsstück 2 in der Öffnung 5 des Bügels 3 eingehakt worden, so kann das Verbindungsstück 2 das vordere Ende 9 des Bügels 3 umfassen. Hierbei greift der Knick 7 um die Kante 10 des Bügels 3 (siehe Pfeil).

Die Figur 2 zeigt eine weitere Darstellung des Brillenbügels 1 im zerlegten und im zusammengebauten Zustand, jedoch aus einer anderen Perspektive. Der Bügel 3 des Brillenbügels 1 weist einen Kanal 11 von der Öffnung 5 bis zur Kante 10 auf, der geeignet ist, einen Teil des Verbindungsstücks 2 aufzunehmen, wenn dieses mit dem Haken 4 in die Öffnung 5 greift und mit dem Knick 7 die Kante 10 umfasst.

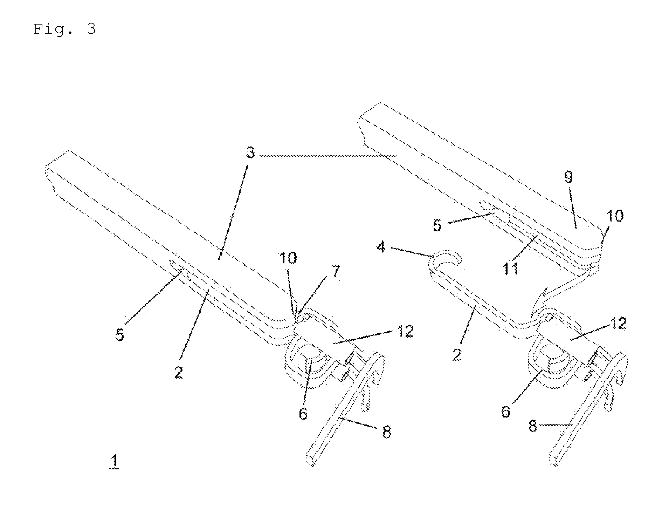

Die Figur 3 zeigt noch eine weitere Darstellung des Brillenbügels 1 im zerlegten und im zusammengebauten Zustand. In der in Figur 3 dargestellten Ausführungsform der Erfindung ist ein Teil des Verbindungsstücks 2 in Form eines Teils eines Brillengelenks 6 ausgebildet. Der Teil des Verbindungsstücks 2 der in Form eines Brillengelenks 6 ausgebildet ist, greift in einen weiteren Teil eines Brillengelenks der an einer frontalen Brillenfassung 8 befestigt ist und bildet mit diesem ein Brillengelenk. Die frontale Brillenfassung 8 ist zur Aufnahme von Brillengläsern geeignet.

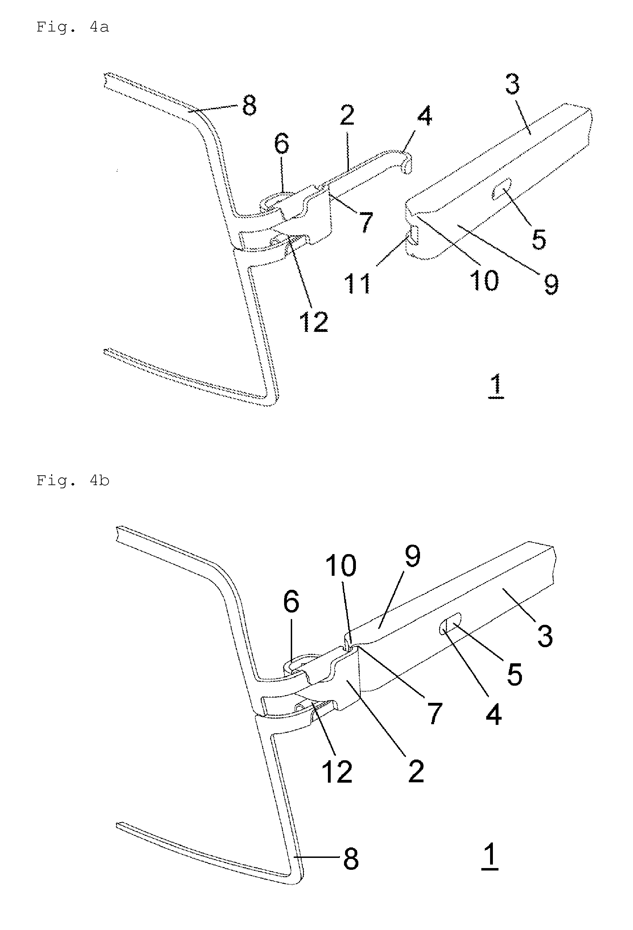

Die Figur 4a zeigt einen weiteren Ausschnitt des Brillenbügels 1, bei dem das Verbindungsstück 2 mit der frontalen Brillenfassung 8 verbunden ist. Die Verbindung zwischen Verbindungsstück 2 und Brillenfassung 8 wird durch ein Brillengelenk hergestellt, wobei ein Teil des Verbindungsstücks 2 durch einen Teil des Brillengelenks 6 gebildet wird.

In der Figur 4a ist das Verbindungsstück 2 getrennt vom Bügel 3 dargestellt.

Die Figur 4b zeigt die in der Figur 4a dargestellte Ausführungsform des Brillenbügels 1 im zusammengebauten Zustand.

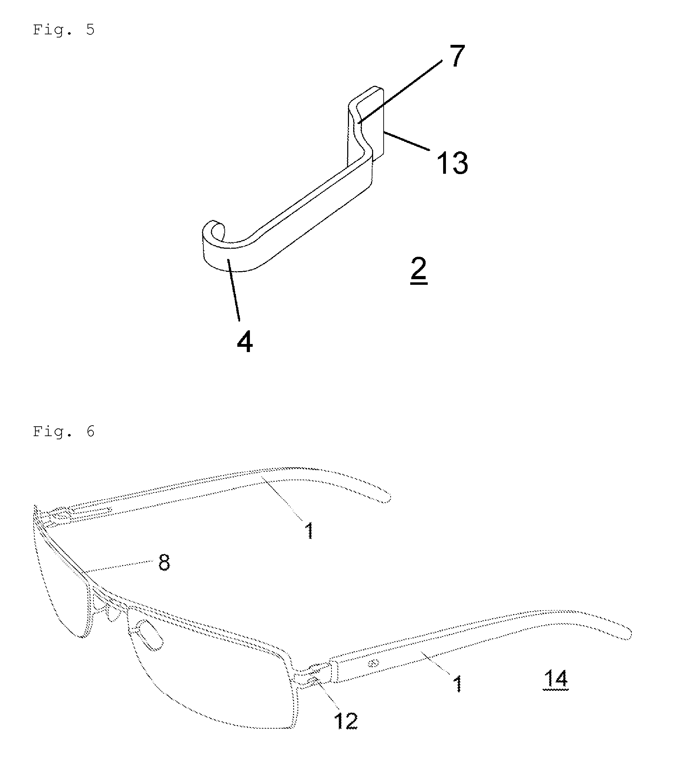

In der Figur 5 wird eine weitere Ausführungsform des Verbindungsstücks 2 gezeigt. In dieser Ausführungsform weist das Verbindungsstück einen Haken 4 und einen Knick 7 auf. Das Verbindungsstück 2 ist jedoch nicht in Form eines Teils eines Brillengelenks ausgebildet, sondern weist eine Verbindungskante 13 auf, mit der das Verbindungsstück 2 mit einem Brillengelenk oder einer frontalen Brillenfassung verbunden werden kann. Die Verbindung zwischen Verbindungsstück 2 und Brillengelenk beziehungsweise der frontalen Brillenfassung kann dabei durch Schweißen, Kleben, Verschrauben, Vernieten oder ähnliche Verfahren hergestellt werden. Zur Verbesserung der Verbindung kann die Verbindungskante 13 je nach Bedarf, von der in Figur 5 gezeigten Form abweichend, geformt sein. So kann die Verbindungskante 13 beispielsweise abgewinkelt sein und/oder Bohrungen für die Aufnahme von Schrauben aufweisen.

In der Figur 6 wird ein Brillengestell 14 gezeigt, das aus einer Brillenfassung 8 und zwei erfindungsgemäßen Brillenbügeln 1 besteht.

Denkbar ist auch eine Ausführungsform des Verbindungsstücks 2, bei der die Anordnung von Haken 4 und Knick 7 vertauscht sind, so dass der Haken 4 um das vordere Ende des Bügels 9 greift und der Knick 7 in die Öffnung 5 im Bügel 3 greift. Bei einer solchen Ausführungsform ist der Haken 4 direkt mit der Brillenfassung 8 oder einem Brillengelenk 12 verbindbar.

### Bezugszeichenliste:

- 1: Brillenbügel
- 2: Verbindungsstück
- 3: Bügel
- 4: Haken
- 5: Öffnung
- 6: Teil eines Brillengelenkes
- 7: Knick
- 8: Brillenfassung
- 9: vorderes Ende des Bügels
- 10: Kante
- 11: Kanal
- 12: Brillengelenk
- 13: Verbindungskante
- 14: Brillengestell

## Patentansprüche

1. Brillenbügel (1) bestehend aus einem Verbindungsstück (2) und einem Bügel (3), **dadurch gekennzeichnet, dass** das eine Ende des Verbindungsstücks (2) mit der frontalen Brillenfassung (8) oder einem Brillengelenk verbunden ist oder selbst Teil eines Brillengelenks (6) ist und
das andere Ende des Verbindungsstücks (2) in eine Öffnung (5) im Bügel (3) greift und das vordere Ende (9) des Bügels (3) umfasst.

2. Brillenbügel (1) nach Anspruch 1, **dadurch gekennzeichnet, dass** das Verbindungsstück (2) reversibel mit dem Bügel (3) verbunden ist.

3. Brillenbügel (1) nach einem der Ansprüche 1 oder 2, **dadurch gekennzeichnet, dass** das Verbindungsstück (2) einen Haken (4) aufweist, der in eine Öffnung (5) des Bügels (3) greift und eine Knick (7), der um das Ende (9) des Bügels (3) greift.

4. Brillenbügel (1) nach einem der Ansprüche 1 bis 3,
**dadurch gekennzeichnet, dass** der Bügel (3) einen Kanal (11) von der Öffnung (5) bis zum vorderen Ende (9) des Bügels (3) aufweist, wobei der Kanal (11) zur Aufnahme des bügelseitigen Teils des Verbindungsstücks (2) geeignet ist.

5. Brillenbügel (1) nach einem der Ansprüche 1 bis 4,
**dadurch gekennzeichnet, dass** das vordere Ende (9) des Bügels (2) eine Kante (10) aufweist.

6. Brillenbügel (1) nach Anspruch 5, **dadurch gekennzeichnet, dass** das Verbindungsstück (2) um die Kante (10) des Bügels (3) greift.

7. Brillenbügel (1) nach einem der Ansprüche 1 bis 6, **dadurch gekennzeichnet, dass** das Verbindungsstück (2) aus einem flexiblen Material besteht.

8. Brillenbügel (1) nach Anspruch 7, **dadurch gekennzeichnet, dass** das Verbindungsstück (2) aus Metall oder Kunststoff besteht.

9. Brillenbügel (1) nach einem der Ansprüche 1 bis 6,
**dadurch gekennzeichnet, dass** der Bügel (3) aus Metall, Kunststoff, Faserverbundstoffen, gewebeverstärkten Kunstoffen, Horn, Holz oder einer Kombination dieser Stoffe besteht.

10. Verfahren zur Herstellung eines Brillenbügels (1) nach einem der vorhergehenden Ansprüche, **dadurch gekennzeichnet, dass** man den Haken (4) des Verbindungsstücks (2) in die Öffnung (5) des Bügels (3) einhakt und anschließend den Knick (7) des Verbindungsstücks um das vordere Ende (9) des Bügels (3) klammert.

11. Verwendung eines Brillenbügels (1) nach einem der vorhergehenden Ansprüche zur Herstellung eines Brillengestells (14).
